Europäisches Patentamt

European Patent Office

Office européen des brevets

(11) Publication number: **0 371 815**

**A1**

# EUROPEAN PATENT APPLICATION

(21) Application number: **89312509.6**

(51) Int. Cl.⁵: **G09B 1/22, G09B 29/00**

(22) Date of filing: **30.11.89**

(30) Priority: **30.11.88 GB 8827998**

(43) Date of publication of application:
**06.06.90 Bulletin 90/23**

(84) Designated Contracting States:
**AT BE CH DE ES FR GR IT LI LU NL SE**

(71) Applicant: **BRACELON (BIRMINGHAM) LIMITED**
**36 Hylton Street**
**Birmingham West Midlands B18 6HN(GB)**

(72) Inventor: **Jefferies, Stanley Royden**
**44 Staple Hall Road Northfield**
**Birmingham West Midlands B31 3TH(GB)**

(74) Representative: **Symes, Christopher A. et al**
**FORRESTER & BOEHMERT**
**Widenmayerstrasse 4**
**D-8000 München 22(DE)**

(54) **Indicator.**

(57) An indicator comprises a disc (10) having the signs of the zodiac arranged in an array (13) around the periphery of the disc and a three-armed pointed (11) which can turn about the centre of the disc.

## Indicator

The present invention relates to an indicator and has specific reference to an indicator adapted to show the connection between or compatibility with the different signs of the zodiac and/or persons born under the various signs of the zodiac.

It is generally understood that a person born under one sign of the zodiac has a certain compatibility with others born under two different signs of the zodiac.

It is an object of the present invention to provide an indicator adapted to show such compatibility.

According to one aspect of the present invention, there is provided an indicator comprising:-

(a) a base member:

(b) an indicating member;

(c) a mount; the arrangement comprising an array of the twelve signs of the zodiac on the base member, the indicating member being mounted for movement by said mount relative to said base member and having three portions each of which is adapted to indicate one of the twelve signs and the other two portions are indicating respective ones of the twelve signs.

Preferably, said twelve signs of the zodiac are arranged in a substantially circular array.

The array may comprise the names of the twelve signs of the zodiac and/or pictorial representations of those signs.

The member may be a three-armed pointer or a disc having three windows, through which respective ones of the signs can be viewed.

Preferably one of the portions of the pointer is distinct from the other two and, where the indicator is of a form adapted to be worn by a person, said distinct indicator may be adapted to indicate on the device the zodiac sign of the wearer.

There may be associated with the array a network which presents six visual links, each link being between the signs of a respective pair of said twelve signs. The network is preferably fixed with respect to the array.

The signs of the array are preferably arranged at a uniform pitch around the centre of the array and said three portions of the member are preferably spaced equally around the centre of the array.

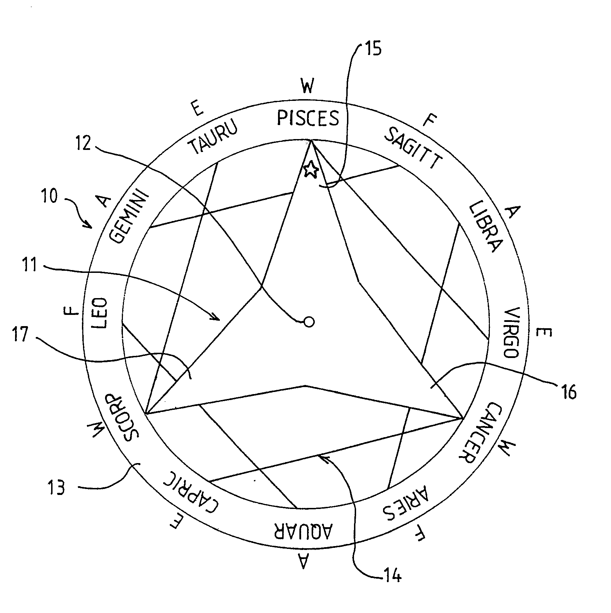

An example of an indicator embodying the invention will now be described, with reference to the accompanying drawing.

The indicator shown in the accompanying drawing comprises a disc 10 and a pointer 11 connected to one another by a bearing 12 which is at the centre of the disc. The bearing provides for turning of the pointer relative to the disc about the centre of the disc. In the example shown, the disc is so formed that it can rest in a stable manner on a flat surface. The bearing protrudes upwardly from the disc so that the pointer is free to turn relative to the disc and relative to the supporting surface. Alternatively, there may be provided a base for engaging the supporting surface, the bearing connecting the disc with the base so that the disc can turn relative to the base and the pointer being fixed with respect to the base.

The disc 10 bears a circular array 13 of the twelve signs of the zodiac. In the example illustrated, the array is immediately adjacent to the periphery of the disc and the signs are arranged at a uniform pitch around the centre of the disc. By way of example, there is shown in the drawing merely the name of each sign of the zodiac. It will be understood that each name may be accompanied by a pictorial representation of the sign concerned. Alternatively, the names may be omitted and the array 13 may comprise pictorial representations only of the signs. In a case where the disc 10 is formed of metal or of a plastics material, the pictorial representations may be engraved, embossed or moulded in the material of the disc. Alternatively, the pictorial representations and/or the names of the signs may be provided on separately formed elements or on a separately formed ring which are or is attached to the disc.

The disc 10 also bears a network 14 of lines, each of which extends between the two signs of a respective pair of the signs forming the array 13. The network comprises six lines and, as shown in the drawing, these may be rectilinear. The lines are spaced equally from the centre of the disc 10 and the minimum distance between that centre and each line of the network is substantially less than the distance between the array 13 and the centre of the disc.

The pointer 11 comprises three arms 15, 16 and 17 which radiate from the centre of the disc and each of which tapers in a direction away from the centre of the disc. Preferably, each arm terminates in a point or a slightly truncated point. The arms 15, 16 and 17 may be identical one with another and are spaced equally about the centre of the disc. In the preferred indicator, the arm 15 has an appearance different from that of arms 16 and 17, which are of the same appearance. The indicator may be of a size suitable for wearing as jewellery. In this case, a gem may be mounted on the arm 15 to provide a distinctive appearance.

Where the indicator is intended to be an item of jewellery it may be adapted to be worn by a person by securement for example around the neck of the person or as a bracelet or as a brooch or badge in which case the indicator may be provided with a chain or other elongate flexible member permitting of the indicator to be worn around the neck of a person, it may be provided with a strap or bangle whereby it may be attached to the wrist of a person for example, or may be provided with a pin or other clasp to enable the indicator to be attached to an article of clothing worn by a person.

It is intended that a person wearing the device would set the arm 15 that has an appearance different from that of the other arms 16, 17 to indicate his or her brithsign, the other two pointers then indicating birth signs of persons deemed to be comptatible with the birth sign of the user.

The indicator may comprise means defining twelve positions of the pointer 11 relative to the disc 10, in each of which positions the arms of the pointer are directed towards respective centres of signs comprised by the array 13, this means tending to prevent setting of the pointer in a position in which an arm is directed to a position between a pair of adjacent signs in the array.

The bearing 12 may be in the form of a rivet which is free fit in a central aperture formed in one of the disc 10 and pointer 11 and which is fast with respect to the other of the disc and pointer.

The bearing may be sufficiently stiff to avoid inadvertent turning of the pointer 11 relative to the disc 10, yet sufficiently free to enable the pointer to be moved by hand to a selected position.

## Claims

1. An indicator comprising:-
(a) a base member (10);
(b) an indicating member (11);
(c) a mount (12);
characterised in that the arrangement comprises an array (13) of the twelve signs of the zodiac on the base member (10), the indicating member (11) being mounted for movement by said mount relative to said base member (10) and having three portions (15,16,17) each of which is adapted to indicate one of the twelve signs and the other two portions are indicating respective ones of the twelve signs.

2. An indicator according to Claim 1 characterised in that said mount (12) comprises a pivotal mount.

3. An indicator according to Claim 1 or Claim 2 characterised in that the array (13) of the twelve signs of the zodiac are arranged in substantially circular form.

4. An indicator according to Claim 3 characterised in that the array (13) comprises the names of the twelve signs of the zodiac, an abbreviation thereof or picture representation.

5. An indicator according to any one of the preceding claims characterised in that the indicating member (11) comprises a three armed pointer (15,16,17) and further characterised in that the array (13) and the pointer are each of a configuration such that when one arm (15) of the pointer is pointing directly to one sign of the zodiac, the other two pointers (16,17) each indicate another sign of the zodiac.

6. An indicator according to any one of Claims 1 to 4 characterised in that the member (11) comprises three "windows" each of which is adapted to show respective ones of the zodiac signs.

7. An indicator according to any one of the preceding claims characterised in that the array (13) is provided with a network (14) presenting six visual links between the signs of the zodiac each link being between the signs of a respective pair of said twelve signs.

8. An indicator according to any one of the preceding claims characterised in that the signs are of a uniform pitch around the centre of the array (13) and said three pointers (15,16,17) of said indicator (11) are spaced equally around the centre of the array.

9. An indicator substantially as hereinbefore described with reference to and as shown in the accompanying drawing.

10. An indicator including any novel feature or novel combination of features disclosed herein and/or shown in the accompanying drawing.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-3 227 184 (DIDIER BLAU)<br>* abstract; page 6, line 20 - page 7, line 2; page 7, lines 9-13; page 4, lines 15-26; figure 1 *<br>--- | 1-4,7,8 | G 09 B 1/22<br>G 09 B 29/00 |
| A | DE-U-7 912 817 (H. CONRAD)<br>* claims 1,2; page 3, lines 1-7; figures 1-3 *<br>--- | 5,6 | |
| A | DE-C- 863 270 (W. KELLER & CO.)<br>* page 3, lines 5-21,43-60; figures 1,2 *<br>--- | 1-3,8 | |
| A | DE-C- 68 293 (MOLESWORTH)<br>* claim 1; figure 1 *<br>----- | 1,3,4,8 | |
| | | | TECHNICAL FIELDS SEARCHED (Int. Cl.5)<br><br>G 09 B 1/00<br>G 09 B 27/00<br>G 09 B 29/00<br>A 63 F 3/00 |

The present search report has been drawn up for all claims

| Place of search | Date of completion of the search | Examiner |
|---|---|---|
| BERLIN | 23-02-1990 | BEITNER M.J.J.B. |

EPO FORM 1503 03.82 (P0401)